# EUROPEAN PATENT SPECIFICATION

(11) **EP 1 571 918 B1**
(45) Date of publication and mention of the grant of the patent: **19.06.2013**
(21) Application number: 03767636.8
(22) Date of filing: 25.11.2003
(51) Int. Cl.: A23K 1/00, A23K 1/16

(54) **FEEDSTUFFS ADDITIVES CONTAINING L-LYSINE WITH IMPROVED ABRASION RESISTANCE, AND PROCESS FOR THEIR PRODUCTION**
MIT VERBESSERTER ABRASIONSFESTIGKEIT L-LYSINE ENTHALTENDER TIERFUTTERMITTELZUSATZ, UND VERFAHREN ZUR DEREN HERSTELLUNG
ADDITIFS POUR PRODUITS ALIMENTAIRES CONTENANT DE LA L-LYSINE PRESENTANT UNE RESISTANCE A L'ABRASION AMELIOREE, ET PROCEDE DE PRODUCTION CORRESPONDANT

(30) Priority: 16.12.2002 US 319843
(43) Date of publication of application: 14.09.2005
(73) Proprietor: Evonik Degussa GmbH, 45128 Essen (DE)
(72) Inventor: DÜBNER, Frank, 61169 Friedberg (DE); KAEPPKE, Friederike, 63584 Gründau (DE); KELLE, Ralf, 33334 Gütersloh (DE); LOTTER, Hermann, 63674 Altenstadt (DE); POHLISCH, Joachim, 63571 Gelnhausen (DE); WECKBECKER, Christoph, 63584 Gründau (DE); CALDWELL, Paul, Omaha, NE 68154 (US); KALIVODA, Lee, Omaha, NE 68130 (US)
(86) International application number: PCT/EP2003/013200
(87) International publication number: WO 2004/054381

(56) References cited:
- EP-A- 0 615 693
- EP-A- 0 743 016
- GB-A- 2 293 304
- US-A- 5 431 933
- US-A- 5 486 363
- US-A- 5 840 358
- US-A- 6 017 555

## Description

### Subject Matter of the Invention

The invention relates to a shaped, in particular granulated feedstuffs additive containing L-lysine and treated with liquid additives, preferably oils, having an improved abrasion resistance, which optionally contains constituents from the fermentation broth and biomass, and a process for the production of this product.

### Prior Art

An animal feedstuffs additive based on fermentation broth is known from EP 0 809 940 B1 (US 5,840,358), which is obtained in granulated form in a fluidised bed.

This product represents a significant advance as regards its properties compared to the products known at that time.

EP 0 743 016 A1 discloses granules of L-lysine obtained from fermentation broth, which are coated with fine particles of an anti-caking agent.

In EP 0 615 693 A1 a process is described wherein an animal feed additive comprising stable pellets is produced by pelletizing from a fermentation broth containing an animal feed additive with at least 39% by weight of the fermentation products present. The pellets can be produced particularly effectively by pelletizing providing they are built up from at least 30% by weight of fine particles of which at least 70% by weight are smaller than 100 µm in size. The biomass by be completely or partly present.

From US 5,431,933 an animal feed supplement and process for its production are known which provide an inexpensive, not excessively hygroscopic or sticky supplement amino acid whose content should be standardizable. The animal feed supplement is based on a fermentation broth and contains the predominant proportion of its contents, optionally with the exclusion of part of the biomass.

US 6,017,555 discloses a process produces an L-Lysine feed supplement with a final L-Lysine purity in the range theoretically between about 35% and 80%, measured as a percent of free-base per kg, and more preferably between about 50% and 80% L-Lysine. The process comp0rises adding a material containing L-Lysine to an L-Lysine fermentation broth or a fraction of an L-Lysine fermentation broth. The added material being an amount which brings a final L-Lysine feed supplement with an L-Lysine purity into a range theoretically between about 35% and 80%, measured as a present of free-base per kg.

According to US 5,486,363 in a process for preparing dry, free-flowing choline chloride-containing powders by atomizing an aqueous choline chloride solution, a colloid-free aqueous choline chloride solution is atomized in a countercurrent-flowing air stream that contains, finely dispersed, a hydrophobic spraying auxiliary metered in such amounts that the sprayed choline chloride droplets are coated with 2 to 15% by weight of spraying auxiliary, based on choline chloride calculated as 100%, and the coated particles are, if desired, collected in a fluidized bed and dried in the gas stream.

However, certain problems still remain as regards the dust formed by abrasion during the further processing. In order to ensure that feedstuffs additives containing carrier materials are free of dust, it was proposed to spray a mineral oil-containing aerosol in an amount of 0.25 to 2 wt.% onto dust-containing material, 75% of which has a particle size of < 400 µ (GB 2 293 304 A).

An agglomeration of the powder is thereby achieved, which then consists in an amount of at least 75% of particles having a size of 400 to 1000 µ.

An essential constituent of these mixtures are inorganic carrier materials, which may comprise up to 96 % of the total.

The above specification does not give any details of the dust formed after transportation and storage.

The active substances that are used in the specification are pure substances that do not contain any constituents from a fermentation broth.

### Object of the Invention

It is known that there is a need for granulated products containing L-lysine such as occur when using fermentation broths, that have an improved handling ability. This concerns in particular an improvement in the abrasion resistance, which is manifested in a reduced dust formation after transportation, storage in silos, and processing in the feedstuffs-producing operation, for example using conveyor belts.

### Description of the Invention

The invention provides substantially dust-free shaped animal feedstuffs additives having improved abrasion resistance, based on fermentation broth and containing L-lysine and preferably the major proportion of the further constituents of the fermentation broth, the biomass produced during the fermentation being contained in an amount of ≥ 0 to 100%, characterised in that the animal feedstuffs additives
1.1. contain L-lysine in a concentration of 30 to 90 wt.%, in particular 40 to 70 %, referred to the total amount, and does not contain inorganic carrier material,
1.2 preferably ≥ 97 wt.% of the animal feedstuffs additive, in particular ≥ 98 % of the feedstuffs additive has a mean particle size between > 0.1 and 1.8 mm, and
1.3 contain on the surface an added liquid additive in an amount of 0.02 to 2.0 wt.%, in particular 0.02 to 1.0 wt.%, referred to the total amount of the feedstuffs additive.

A proportion of 0.2 to 1.0 wt.%, in particular 0.2 to 0.6 wt.%, is particularly preferred.

The expression "based on fermentation broth" means that the starting material is a broth containing L-lysine, produced in a known way by fermentation (e.g. EP 0 533 039 B1). This contains in general as a further essential constituent the biomass formed during the fermentation, consisting of the amino acid-forming microorganisms.

This broth can be separated before the shaping stage, but is generally contained in an amount of up to 100 % in the shaped or granulated product.

The expression "on the surface" implies that the added liquid diffuses, even if only to a slight extent, into regions beneath the surface.

"Substantially dust-free" means that the proportion of particles of size < 100 µm is in the range > 0 up to 1 %, preferably up to 0.5 wt.%, and that the dust value is from 0.1 to 5.6, in particular 0.3 to 2.5.

More than 97 wt.% of the product, in particular ≥ 98 % and particularly preferably 99 % of the feedstuffs additive has a mean particle size preferably between 0.1 and 1.8 mm.

Further preferred constituents of the animal feedstuffs additive (referred to the total amount) include, in addition to the optionally contained biomass derived from the fermentation broth:
1. L-lysine in an amount of 30 to 90 wt.%, in particular 40 to 70 wt.%; if the L-lysine content produced in the fermentation is not sufficient, the desired value is adjusted by adding for example L-lysine HCl.
2. Protein content of 0.5 to 20 %, in particular 0.5 to 10 %, particularly preferably 0.5 to 7 %.
3. Content of carboxylic acid that is originally contained in the product of at most 13 %, carboxylic acids with fewer than 8 carbon atoms making up at most 10 % of the weight.
4. Fats and oils from the original product (optionally biomass and dissolved fractions from the fermentation broth), making up at most 6% of the weight.

The product does not contain inorganic carrier materials such as are described for example in GB 2 293 304 A.

Granules produced according to EP 0 809 940 B1 constitute preferred starting products for the feedstuffs additives that can be produced according to the invention.

In particular the granules have a mean particle size between 0.1 and 1.8 mm (≥ 97 %), preferably ≥ 95 wt.% of the particles having a particle size in the range between 0.3 and 1.8 mm. In a particularly preferred variant the particle size is in the range between 0.3 and 1.5 mm (≥ 95 %).

These granules are preferably obtained by spraying fermentation broths containing L-lysine in fluidised bed granulation drying units.

However, granules or shaped animal feedstuffs additives produced in another way and that contain lysine may also be used (e.g. EP 0 615 693 B1).

The dust fraction (particles < 100 µ) of the starting material is ideally < 3 wt.%. This value should not however be regarded as critical. Amounts of for example up to 10 wt.% may also be used without very fine dust having to be separated beforehand. Since very fine dust amounts of < 3 % are very difficult to determine gravimetrically, an optical test was developed.

Analysis method for the optical detection of the dust content
50 g of the product fall 0.8 metre in a closed chamber having the dimensions 320(W) x 210(D) x 950(H) mm. When the product falls to the floor the dust whirls up into the air space. The attenuation of the light beam in the head space of the apparatus is measured as a function of time, and the maximum value (%) is recorded. A halogen lamp (not a monochromatic light source) serves as light source. This measurement may be repeated after 30 seconds to obtain the 30-second value.

At values of less than 5 the product appears to be virtually optically dust free. If the dust value is above 20, the very fine dust fraction in the product can also be determined in a simple manner gravimetrically according to the prior art.

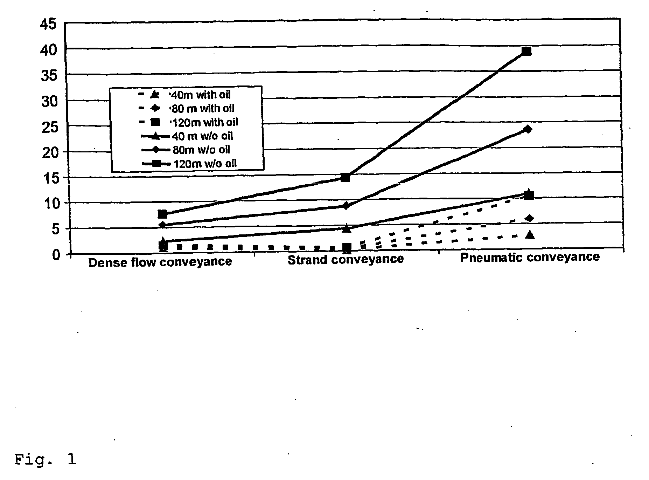

The dust content of the untreated product drastically increases under mechanical stress, such as occurs for example when the product is conveyed. In the case of pneumatic transportation over 40 to 120 m the untreated product may have a 100 % greater dust fraction and a dust value that is three times as large compared to the treated product (see Table 1). These figures also apply to other types of mechanical conveyance (see Fig. 1).

The values are those that were measured after combining the product with the finely particulate fractions that are conventionally trapped in filters. The additionally recorded dust fraction consists especially of 10 to ca. 90 µm, in particular 10 to ca. 50 µm large, granule fragments that have flaked off, and is identical as regards composition to the desired product. The product according to the invention is preferably substantially round and is compact in appearance.

The very fine dust fraction (< 100 µ) after conveyance over 40, 80 or 120 m by various methods (dense flow, strand, pneumatic) is < 1 wt.%, preferably < 0.5 wt.%, if products according to the invention are used having a dust value of ≤ ca. 1.

Dust values of ≤ ca. 11, preferably ≤ ca. 6, are found in particular with conveying lengths of 40 or 80 m.

In dense flow conveyance air speeds of 1.5 to 4 m/sec and product/air ratios of 30 to 80 are generally employed. In strand conveyance the ranges are 5 to 15 m/sec and a product/air ratio of 6 to 20. The values for pneumatic conveyance are 17 to 30 m/sec and a product/air ratio of 1 to 5.5.

The constituents of a feedstuffs additive based on fermentation broth are known *per se* to the person skilled in the art.

These constituents on the one hand optionally comprise the total amount or parts of the biomass (≥ 0) that is formed during the fermentation. Alternatively the fermentation broth contains, apart from L-lysine, dissolved constituents that are derived on the one hand from the nutrient medium, or also contains compounds separated from the micro-organism that is employed.

The bulk density of the shaped, in particular granulated feedstuffs additive is generally in the range from 600 to 900 kg/m³, in particular 650 to 850 kg/m³.

After the addition according to the invention of the aforementioned additives in an amount of 0.1 to 2.0 %, an increase in the bulk density was observed (see Table 5). Mineral oils, vegetable oils or mixtures of vegetable oils may be used as oils (additives). These include in particular oils that are liquid at room temperature, such as soybean oil, olive oil, soybean oil/lecithin mixtures or other edible oils, as long as they do not alter the character of the animal feedstuffs additives.

Silicone oils, polyethylene glycols or hydroxyethylcellulose in aqueous solution are also suitable as additives.

Oil-water emulsions are also suitable in order to obtain the product according to the invention.

Furthermore complex by-products obtained from the sugar and starch industry such as corn steep liquor may be used as additives, and in particular also oily by-products, for example in the form of phospholipid fractions, formed in the extraction and hydrolysis of maize starch.

The liquid treatment agent is applied to the particles at a temperature of 10 to 100°C, preferably 20 to 60°C.

Although the feedstuffs additive to be treated has, due to its derivation from the fermentation, an analysable oil fraction, only the surface treatment with the aforementioned additives, in particular oils, leads to the improved abrasion resistance of the product.

It is also possible to distinguish clearly the treated product from the starting products optically under the microscopy by the shape of the surface, the treated product after mechanical stress, for example on a conveyor belt, having significantly smaller dust fractions that the untreated product.

At the same time the originally feared clumping of the particles due to the additional oil content does not occur on prolonged storage, with the result that the flow behaviour too is not impaired.

The product according to the invention has after mechanical stress a significantly narrower grain size distribution that the untreated granulated animal feedstuffs additive. Under mechanical stress the initial granules are destroyed, to some extent with dust formation, and the grain spectrum is broadened. This is manifested for example during storage in silos in the form of an undesirable demixing of the stored product.

This means that the dust fractions and dust values vary considerably in the known granules, depending on the sampling site.

Corresponding incalculable dust loads occur on emptying silos, when such demixed products are being loaded.

This problem does not occur with the product according to the invention.

The invention also provides a process for the production of a feedstuffs additive containing lysine based on fermentation broth and having an improved abrasion resistance, which process is characterised in that a shaped, in particular granulated animal feedstuffs additive containing 30 to 90 wt.%, in particular 40 to 70 wt.% of L-lysine, with a mean particle size preferably in the range from > 0.1 to ≤ 1.8 mm, is sprayed with an liquid additive, the aforementioned additives, preferably oils, being metered in in an amount of 0.02 to 2 wt.% referred to the animal feedstuffs additive that is used.

Amounts of 0.2 to 1 wt.%, in particular amounts of 0.1 to 0.6 wt.%, are preferred.

The starting product contains the major proportion of the further constituents of the fermentation broth, ≥ 0 to 100 % of the biomass produced during the fermentation being contained.

The product according to the invention is then obtained.

An improved abrasion resistance is achieved by the addition of these small amounts and in addition the very fine dust fraction that is present becomes bound. The largely dust-free product that is thereby formed and the optimised free-flowing behaviour lead to an improved handling of the product. This stability is found to be unchanged in long-term storage tests and under storage at high temperatures. The additive may be added batchwise or continuously. In order to achieve a uniform distribution of the additive in the product, it is recommended to feed the additive through one or more nozzles.

Mechanical or pneumatic mixers may be used as mixing equipment:
- vessels rotating about one or more axes, such as rotary tube mixers, tumble dryers, double-cone dryers,
- vessels with fixed or moving mixing tools such as turbulent flow mixers, ploughshare mixers, paddle-screw mixers,
- airmix mixers.

Furthermore, the additive may also be sprayed in during other process stages and mixed with the animal feedstuffs additive, such as for example
- in the bed of a fluidised bed dryer,
- in a pneumatically operating product conveyor line,
- in a screw-driven product conveyor line,
- in a product silo with mechanical or pneumatic mixing.

The product obtained has, despite the liquids added in minor amounts and the hydrophilic nature of the feedstuffs additive, a homogeneous distribution of these liquids. No agglomerates or lumps are formed.

### Example 1

### Production

100 kg of an L-lysine-containing feedstuffs additive (granules) produced according to EP 0 809 940 B1 were added to a 300 1 capacity Lödige ploughshare mixer (60 % filling) and the mixer was set to a speed of 150 rpm. 0.5 kg of soybean oil was then added through a hollow-cone nozzle having a 1.1 mm bore. The dust content was analysed after a mixing time of 60 seconds.
Dust value before oil addition: 9.0
Dust value after oil addition: 0.1

It can be seen that the very fine dust fraction is bound to the granule particles.

A granular material containing L-lysine, the biomass and constituents from the fermentation was used as starting material. The material contains at least 46.8 % lysine and has a bulk density of 600 to 800 kg/m³.

This product was also used in the further examples.

The bulk density was measured according to DIN 1060, except that the feedstuffs additive continuously falls through the funnel into the bulk material vessel. It is not collected in the funnel, which is then emptied into the bulk material vessel after opening a cap.

### Example 2: Influence of the oil treatment on the dust content under pneumatic conveyance

**Table 1**

| **Product** | **Time** | **Conveying Length** | **Dust Amount in the Filter after in each case 40 m** | **Ratio of Dust in the Filter to Total Amount of Product** | **Dust Value** |
|---|---|---|---|---|---|
| | **Min** | **m** | **g** | **%** | - |
| without oil | | 0 | | | 1 |
| | 3.16 | 40 | 148 | 0.4 | 11 |
| | 3.08 | 80 | 122 | 0.72 | 23.6 |
| | 2.87 | 120 | 236 | 1.36 | 38.9 |
| | | | 506 | 1.36 | |
| | | | | | |
| with 0.5 % oil | | 0 | | | 0.2 |
| | 3.66 | 40 | 50 | 0.11 | 2.75 |
| | 3.66 | 80 | 90 | 0.32 | 6 |
| | 3.66 | 120 | 90 | 0.52 | 10.5 |
| | | | 230 | 0.52 | |

The measurements show a significantly reduced dust formation on account of the improved abrasion resistance after the treatment of the animal feedstuffs granules with oil (soybean oil).

Both products were previously practically dust-free in order to avoid falsification of the results by any dust contents already present.

### Example 3

### Influence of various oils on the dust content

**Table 3**

| **Test** | **Dust Value** |
|---|---|
| Without oil | 5.6 |
| +0.5% mineral oil, low viscosity | 2.5 |
| +0.52% mineral oil, viscous | 1.4 |
| +0.55% silicone oil, industrial | 1.6 |
| +0.52% olive oil, native | 1.5 |

### Example 4

### Use of various oils

The starting product according to Example 1 was used in an amount of 400 g, and was stirred with a blade mixer (60 rpm) and sprayed with the various oils.

**Table 4**

| **Experiment** | **Additive** | **Amount (%)** | **Temp. (°C)** | **Time (min.)** | **Dust Value (-)** |
|---|---|---|---|---|---|
| 1^{st} pattern | without | | | | 20.9 |
| A | AU10 | 1.38 | 50 | 10 | 0.2 |
| B | AU10 | 1 | 60 | 5 | 0.1 |
| C | AU20 | 0.55 | 60 | 5 | 1.3 |
| D | AU30 | 0.563 | 40 | 5 | 0.7 |
| E | edible oil | 0.5 | 60 | 5 | 3.7 |
| F | PEG400 | 0.75 | 60 | 5 | 0.6 |
| G | CSL | 0.875 | 60 | 5 | 5.3 |
| 2^{nd} pattern | without | | | | 17.7 |
| A | soybean oil | 0.825 | 60 | 5 | 0.7 |
| B | soybean oil | 1.28 | 60 | 5 | 0.1 |
| C | crude soybean oil | 0.33 | 60 | 5 | 0.8 |

It can be seen that there is a significant reduction in the dust content when using various oils and additives.

Abbreviations used:
- PEG400:: polyethylene glycol
- CSL:: corn steep liquor
- AU:: lecithin/soybean oil mixtures (AU: acetone-insoluble fraction)

| | |
|---|---|
| 1) AU 10 | 16.1g lecithin(AU 62) |
| | 83.9g |
| | soybean |
| | oil |
| | |
| 2) AU 20 | 32.3g lecithin(AU 62) |
| | 67.7g |
| | soybean |
| | oil |
| | |
| 3) AU 30 | 48.4g lecithin(AU 62) |
| | 51.6g |
| | soybean |
| | oil |

### Example 5

### Properties of the treated product

**Table 5. Oil was sprayed (60°C) onto the animal feedstuffs additive (see Example 1) in a 150 1 capacity ribbon mixer (28 rpm, t = 4 min).**

| | | | | | |
|---|---|---|---|---|---|
| Oil addition [%] | - | + 0.1 | + 0.2 | + 0.3 | + 0.5 |
| Flowability | 2 | 2 | 2 | 2 | 2 |
| Bulk density | 760 kg/m³ | 770 kg/m³ | 770 kg/m³ | 790 kg/m³ | 810 kg/m³ |
| Dust value | 6 | 2 | 0.6 | 0.3 | 0.1 |
| Water uptake 1 hr / 40 °C / 75% | + 5 % | + 4 % | + 4 % | + 4 % | + 4 % |
| Water uptake 4 hrs / 40 °C / 75% | + 13 % | + 12 % | + 14 % | + 12 % | + 12 % |

### Example 6

### Influence of the addition of oil in various forms of transportation, on the abrasion

An animal feedstuffs additive as described in Example 1 was conveyed under various conditions matching practical applications.

The conveyance involved dense flow, strand and pneumatic conveyance with conveying lengths of 40 to 120 m. These are operated at different air speeds and product/air ratios.

The following were selected in the present case:

| | **Air Speed (m/sec)** | **Product/Air Ratio (µ)** |
|---|---|---|
| Dense flow conveyance | 2.2 | 55 |
| Strand conveyance | 7.3 | 10.6 |
| Pneumatic conveyance | 24.0 | 3.3 |

The value for the dust includes the dust deposited in the filter

The influence of the treatment of the granulated starting product, in this case with soybean oil, on the abrasion can clearly be seen, which is measured as the dust value after mechanical treatment over various conveying lengths compared to the starting product (Fig. 1).

### Example 7

### Demixing behaviour in the silo

Untreated granulated animal feedstuffs additive and additive treated with 0.5 wt.% soybean oil were in each case discharged from a silo into 1000 kg sacks.

A sample was taken from every tenth sack and the dust content was measured; the maximum value as well as the value after 30 seconds' settling time were measured.

A bandwidth of the dust value ranging from 10.1 to 21.7 is found in the untreated product (Table 6).

The dust value for the treated animal feedstuffs additive is between 1.7 and 4.1, with a mean value of 2.9 (Table 7).

The mean value of 1.6 for the dust content after 30 seconds also points to the extremely low very fine dust content in the treated product.

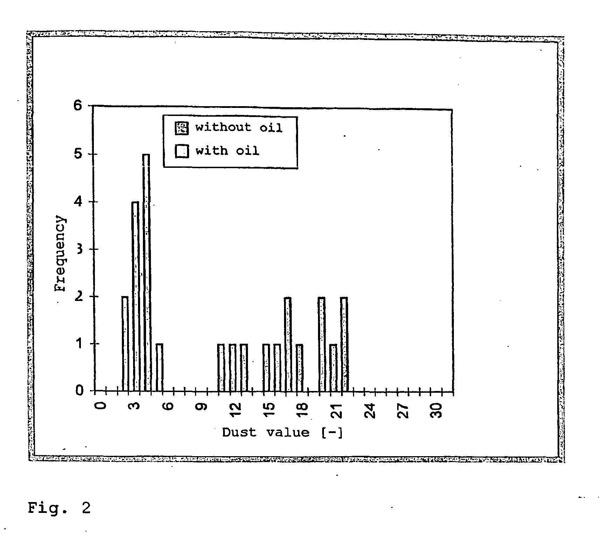

Fig. 2 shows the distribution of the dust values of Example 7. The number of sacks having the corresponding dust value is given under "Frequency". The untreated product does not exhibit a standard distribution but instead a broad scatter of the dust value. This means that batches with significantly varying, increased dust fractions occur within any one lot. This accords with the empirical result that the dust fraction of product fractions contained in a silo cannot be predicted.

On account of its improved abrasion behaviour the treated product has only a very low dust fraction and thus a narrow particle spectrum. The particle distribution in a silo expressed as the dust value has the form of a standard distribution, with a very small standard deviation. This is confirmation of the fact that, after treatment of the product, unpredictable ."dusty fractions" no longer have to be expected when emptying a silo.

**Table 6: Untreated product**

| Sample | Dust Value | Dust Value after 30 sec |
|---|---|---|
| 1 | 21.2 | 14.6 |
| 2 | 11.5 | 9.8 |
| 3 | 10.1 | 7.7 |
| 4 | 16.5 | 14.3 |
| 5 | 13.0 | 10.6 |
| 6 | 17.1 | 10.8 |
| 7 | 21.7 | 17.5 |
| 8 | 16.3 | 14.1 |
| 9 | 19.1 | 13.3 |
| 10 | 14.5 | 11.4 |
| 11 | 20.0 | 14.2 |
| 12 | 20.8 | 13.9 |
| 13 | 15.4 | 10.1 |
| | | |
| Min. | 10.1 | 7.7 |
| Max. | 21.7 | 17.5 |
| Average | 16.7 | 12.5 |
| Standard deviation | 3.76 | 2.65 |

**Table 7: Product treated with soybean oil**

| Sample | Dust Value | Dust Value after 30 sec |
|---|---|---|
| 1 | 2.3 | 1.4 |
| 2 | 1.8 | 0.9 |
| 3 | 1.7 | 1.1 |
| 4 | 3.5 | 1.4 |
| 5 | 4.1 | 1.7 |
| 6 | 3.7 | 2.3 |
| 7 | 3.3 | 1.7 |
| 8 | 2.9 | 1.5 |
| 9 | 2.7 | 1.7 |
| 10 | 3.1 | 1.9 |
| 11 | 3.4 | 1.7 |
| 12 | 2.6 | 1.7 |
| | | |
| Min. | 1.7 | 0.9 |
| Max. | 4.1 | 2.3 |
| Average | 2.9 | 1.6 |
| Standard deviation | 0.74 | 0.36 |

## Claims

1. A substantially dust-free animal feedstuffs additive based on fermentation broth having improved abrasion resistance, containing L-lysine and preferably the majority of the further constituents of the fermentation broth, the biomass produced during the fermentation being contained in an amount of ≥ 0 to 100 %, wherein the animal feedstuffs additive
1.1 contains L-lysine in a concentration of 30 to 90 wt.% referred to the total amount, and does not contain inorganic carrier materials;
1.2 an amount of preferably ≥ 97 %, in particular ≥ 98 %, has a mean particle size of > 0.1 to 1.8 mm, and
1.3 contains on the surface a proportion of added liquid additive in an amount of 0.02 to 2 wt.% referred to the total amount of the feedstuffs additive.

2. The animal feedstuff additive as claimed in claim 1, wherein it contains oil as added liquid additive

3. The animal feedstuffs additive as claimed in claim 1, wherein it contains on the surface, as liquid additive, one or more oils selected from the group comprising mineral oil, vegetable oils, soybean oil, olive oil, soya/lecithin mixtures, edible oils, mixtures of vegetable oils.

4. The animal feedstuffs additive as claimed in claim 1, wherein it contains on the surface one or more of the liquid additives selected from the group comprising silicone oils, polyethylene glycols or hydroxyethylcellulose in aqueous solution.

5. The animal feedstuffs additive as claimed in claim 1, wherein it contains byproducts from the sugar and starch industry, in particular corn steep liquor (CSL) or oily compounds.

6. The animal feedstuffs additive as claimed in claim 1, wherein it contains 0.2 to 1.0 wt.% of added liquid additive.

7. The animal feedstuffs additive as claimed in claim 1, with a bulk density in the range between 600 to 950 kg/m³, in particular 650 to 900 kg/m³.

8. A process for the production of a substantially dust-free feedstuffs additive containing L-lysine based on fermentation broth, containing L-lysine and the major proportion of the further constituents of the fermentation broth and being free of inorganic carrier materials, the fermentation biomass being contained in an amount of ≥ 0 to 100 %, wherein a shaped, in particular granulated animal feedstuffs additive containing 30 to 90 wt.% of lysine is sprayed with a liquid additive, the liquid additive being metered in an amount of 0.02 to 2 wt.% referred to the amount of animal feedstuffs additive used.

9. The process as claimed in claim 8, wherein an animal feedstuffs additive having a mean particle size of 0.1 to ≤ 1.8 mm is used, 0.1 to 10 wt.% having a particle size of < 100 µ.

10. The process as claimed in claim 8, wherein as liquid additive there is used one or more oils selected from the group comprising mineral oil, vegetable oils, soybean oil, olive oil, soya/lecithin mixtures, edible oils, mixtures of vegetable oils.

11. The process as claimed in claim 8, wherein one or more liquid additives selected from the group comprising silicone oils, polyethylene glycols or hydroxyethylcellulose (in aqueous solution) are used.

12. The process as claimed in claim 8, wherein the feedstuffs additive is sprayed with a liquid additive in a moved state.

13. The process as claimed in claim 8, wherein the feedstuffs additive is sprayed with a liquid additive in a mechanical or pneumatic mixer.

## Patentansprüche

1. Im Wesentlichen staubfreies Tierfutterzusatzmittel auf Fermentationsbrühebasis mit verbesserter Abriebfestigkeit, das L-Lysin und vorzugsweise den Großteil der weiteren Bestandteile der Fermentationsbrühe enthält, wobei die während der Fermentation produzierte Biomasse in einer Menge von ≥ 0 bis 100% vorliegt, wobei das Tierfutterzusatzmittel
1.1 L-Lysin in einer Konzentration von 30 bis 90 Gew.-% in Bezug auf die Gesamtmenge enthält und keine anorganischen Trägermaterialien enthält;
1.2 eine Menge von vorzugsweise ≥ 97%, insbesondere ≥ 98%, eine mittlere Teilchengröße von > 0,1 bis 1,8 mm aufweist, und
1.3 an der Oberfläche einen Anteil an zugesetztem flüssigem Zusatzmittel in einer Menge von 0,02 bis 2 Gew.-% in Bezug auf das Gesamtgewicht des Futterzusatzmittels enthält.

2. Tierfutterzusatzmittel nach Anspruch 1, das Öl als zugesetztes flüssiges Zusatzmittel enthält.

3. Tierfutterzusatzmittel nach Anspruch 1, das an der Oberfläche als flüssiges Zusatzmittel ein oder mehrere Öle, ausgewählt aus der Gruppe, umfassend Mineralöl, Pflanzenöl, Sojaöl, Olivenöl, Soja/Lecithin-Mischungen, Speiseöle, Pflanzenölmischungen enthält.

4. Tierfutterzusatzmittel nach Anspruch 1, das an der Oberfläche eines oder mehrere der flüssigen Zusatzmittel, ausgewählt aus der Gruppe, umfassend Silikonöle, Polyethylenglykole oder Hydroxyethylcellulose in wässriger Lösung enthält.

5. Tierfutterzusatzmittel nach Anspruch 1, das Nebenprodukte der Zucker- und Stärkeindustrie, insbesondere Maisquellwasser (CSL) oder ölige Verbindungen, enthält.

6. Tierfutterzusatzmittel nach Anspruch 1, das 0,2 bis 1,0 Gew.-% zugesetztes flüssiges Zusatzmittel enthält.

7. Tierfutterzusatzmittel nach Anspruch 1, mit einer Schüttdichte im Bereich zwischen 600 und 950 kg/m³, insbesondere 650 bis 900 kg/m³.

8. Verfahren zur Herstellung eines im Wesentlichen staubfreien Futterzusatzmittels auf Fermentationsbrühebasis, das L-Lysin und den Großteil der weiteren Bestandteile der Fermentationsbrühe enthält und frei von anorganischen Trägermaterialien ist, wobei die Fermentationsbiomasse in einer Menge von ≥ 0 bis 100% enthalten ist, wobei ein geformtes, insbesondere granuliertes, Tierfutterzusatzmittel, das 30 bis 90 Gew.-% Lysin enthält, mit einem flüssigen Zusatzmittel besprüht wird, wobei das Zusatzmittel in einer Menge von 0,02 bis 2 Gew.-% in Bezug auf das eingesetzte Tierfutterzusatzmittel zudosiert wird.

9. Verfahren nach Anspruch 8, wobei ein Tierfutterzusatzmittel mit einer mittleren Teilchengröße von 0,1 bist ≤ 1,8 mm eingesetzt wird, wobei 0,1 bis 10 Gew.-% eine Teilchengröße von < 100 p aufweisen.

10. Verfahren nach Anspruch 8, wobei ein oder mehrere Öle aus der Gruppe, umfassend Mineralöl, Pflanzenöl, Sojaöl, Olivenöl, Soja/Lecithin-Mischungen, Speiseöle, Mischungen von Pflanzenölen als flüssiges Zusatzmittel eingesetzt werden.

11. Verfahren nach Anspruch 8, wobei ein oder mehrere flüssige Zusatzmittel aus der Gruppe, umfassend Silikonöle, Polyethylenglykole oder Hydroxyethylcellulose (in wässriger Lösung) eingesetzt werden.

12. Verfahren nach Anspruch 8, wobei das Besprühen des Futterzusatzmittels mit einem flüssigen Zusatzmittel im bewegten Zustand erfolgt.

13. Verfahren nach Anspruch 8, wobei das Besprühen des Futterzusatzmittels mit einem flüssigen Zusatzmittel in einem mechanischen oder pneumatischen Mischer erfolgt.

## Revendications

1. Additif pour aliments pour animaux sensiblement dépourvu de poussière, à base de bouillon de fermentation ayant une résistance à l'abrasion améliorée, contenant de la L-lysine et de préférence la majorité des autres constituants du bouillon de fermentation, la biomasse produite pendant la fermentation étant présente dans une quantité de ≥ 0 à 100 %, **caractérisé en ce que** l'additif pour aliments pour animaux
1.1 contient de la L-lysine dans une concentration de 30 à 90 % en poids par rapport à la quantité totale, et ne contient pas de matériaux supports minéraux ;
1.2 une quantité de préférence ≥ 97 %, en particulier ≥ 98 %, a une taille moyenne de particules > 0,1 à 1,8 mm, et
1.3 contient à la surface une proportion d'additif liquide ajouté, dans une quantité de 0,02 à 2 % en poids par rapport à la quantité totale de l'additif pour aliments.

2. Additif pour aliments pour animaux selon la revendication 1, **caractérisé en ce qu'**il contient de l'huile en tant qu'additif liquide ajouté.

3. Additif pour aliments pour animaux selon la revendication 1, **caractérisé en ce qu'**il contient à la surface, en tant qu'additif liquide, une ou plusieurs huiles choisies dans le groupe comprenant de l'huile minérale, des huiles végétales, de l'huile de soja, de l'huile d'olive, des mélanges soja/lécithine, des huiles comestibles, des mélanges d'huiles végétales.

4. Additif pour aliments pour animaux selon la revendication 1, **caractérisé en ce qu'**il contient à la surface un ou plusieurs des additifs liquides choisis dans le groupe comprenant les huiles de silicone, les polyéthylèneglycols ou l'hydroxyéthylcellulose en solution aqueuse.

5. Additif pour aliments pour animaux selon la revendication 1, **caractérisé en ce qu'**il contient des sous-produits de l'industrie du sucre et de l'amidon, en particulier de la liqueur de trempe de maïs (CSL, corn steep liquor) ou des composés huileux.

6. Additif pour aliments pour animaux selon la revendication 1, **caractérisé en ce qu'**il contient de 0,2 à 1,0 % en poids d'additif liquide ajouté.

7. Additif pour aliments pour animaux selon la revendication 1, ayant une masse volumique en vrac dans la gamme comprise entre 600 et 950 kg/m³, en particulier 650 et 900 kg/m³.

8. Procédé de production d'un additif pour aliments sensiblement dépourvu de poussière à base de bouillon de fermentation, contenant de la L-lysine et la proportion majeure des autres constituants du bouillon de fermentation et étant dépourvu de matériaux supports minéraux, la biomasse de fermentation étant présente dans une quantité ≥ 0 à 100 %, **caractérisé en ce qu'**un additif pour aliments pour animaux formé, en particulier granulé, contenant de 30 à 90 % en poids de lysine est pulvérisé avec un additif liquide, l'additif étant dosé dans une quantité de 0,02 à 2 % en poids par rapport à la quantité d'additif pour aliments pour animaux utilisée.

9. Procédé selon la revendication 8, **caractérisé en ce qu'**un additif pour aliments pour animaux ayant une taille moyenne de particule de 0,1 à ≤ 1,8 mm est utilisé, de 0,1 à 10 % en poids ayant une taille de particule de < 100 p.

10. Procédé selon la revendication 8, **caractérisé en ce qu'**en tant qu'additif liquide, on utilise une ou plusieurs huiles choisies dans le groupe comprenant de l'huile minérale, des huiles végétales, de l'huile de soja, de l'huile d'olive, des mélanges soja/lécithine, des huiles comestibles, des mélanges d'huiles végétales.

11. Procédé selon la revendication 8, **caractérisé en ce qu'**on utilise un ou plusieurs additifs liquides choisis dans le groupe comprenant les huiles de silicone, les polyéthylèneglycols ou l'hydroxyéthylcellulose (en solution aqueuse).

12. Procédé selon la revendication 8, **caractérisé en ce que** l'additif pour aliments est pulvérisé avec un additif liquide dans un état mobile.

13. Procédé selon la revendication 8, **caractérisé en ce que** l'additif pour aliments est pulvérisé avec un additif liquide dans un mélangeur mécanique ou pneumatique.
